# EUROPÄISCHE PATENTSCHRIFT

(11) **EP 3 283 209 B1**
(45) Veröffentlichungstag und Bekanntmachung des Hinweises auf die Patenterteilung: **03.04.2019**
(21) Anmeldenummer: 16717592.6
(22) Anmeldetag: 13.04.2016
(51) Int. Cl.: B01J 4/00, B01J 8/02

(54) **VORRICHTUNG, VERWENDUNG UND VERFAHREN ZUM VERSPRÜHEN VON FLÜSSIGKEITEN UND DER ERZEUGUNG VON FEINSTNEBEL**
APPARATUS, USE AND PROCESS FOR SPRAYING LIQUIDS AND PRODUCING VERY FINE MIST
DISPOSITIF, UTILISATION ET PROCÉDÉ DE PULVÉRISATION DE LIQUIDES ET DE PRODUCTION D'UN BROUILLARD DE FINES

(30) Priorität: 16.04.2015 DE 102015206843
(43) Veröffentlichungstag der Anmeldung: 21.02.2018
(73) Patentinhaber: hte GmbH the high throughput experimentation company, 69123 Heidelberg (DE)
(72) Erfinder: FIND, Josef, 90475 Nuernberg (DE); FINGER, Kurt-Erich, 69214 Eppelheim (DE); HAAS, Alfred, 69214 Eppelheim (DE); FRIESS, Markus, 67473 Lindenberg (DE); KOECHEL, Oliver, 67308 Bubenheim (DE); DEJMEK, Michael, 69488 Birkenau (DE)
(74) Vertreter: BASF IP Association
(86) Internationale Anmeldenummer: PCT/EP2016/058109
(87) Internationale Veröffentlichungsnummer: WO 2016/166153

(56) Entgegenhaltungen:
- WO-A1-2010/018261
- US-A- 6 142 457
- US-B1- 6 241 159

## Beschreibung

Die vorliegende Erfindung betrifft eine Vorrichtung und ein Verfahren zum Versprühen von Flüssigkeiten und der Erzeugung von Feinstnebel.

Ein Anwendungsgebiet der Erfindung liegt im Bereich der Katalysatorforschung und Katalysatortestungsstände im Laborbereich, in dem flüssige Edukte mit Katalysatoren in Kontakt gebracht werden, um diese unter kontrollierten Bedingungen zur Reaktion zu bringen. Die Verbesserung der Labormethoden ist von großer wirtschaftlicher und technischer Bedeutung, da hierdurch wesentlich kostengünstiger Versuchsdaten erzielt werden können, als dies mit Pilotanalagen und Produktionsanlagen der Fall ist. Weitere Anwendungsgebiete beziehen sich auf die Benetzung sowie die Imprägnierung von pulverförmigen Trägermaterialien mit Flüssigkeiten. Die Flüssigkeiten beziehungsweise die Imprägnierlösung können Aktivkomponenten oder Wirkstoffe in gelöster Form enthalten, die mittels des erfindungsgemäßen Verfahrens auf die Festkörper aufgetragen werden können. Somit können die Oberflächeneigenschaften der pulverförmigen Festköper in kontrollierter Weise modifiziert werden.

Eine große technische Herausforderung bei der katalytischen Umsetzung von Einsatzstoffen in fluidisierten Katalysatorbetten ist dann gegeben, wenn die Handhabbarkeit der Edukte schwierig ist. Dies ist insbesondere dann der Fall, wenn es sich bei den Edukten um Öle oder auch um Schweröle handelt, die nur schlecht zu prozessieren sind. Das in der Technik bedeutsamste Verfahren zur Verarbeitung von Erdölen und Vakuumgasölen (VGO's) ist deren Umsetzung im FCC-Prozess, dem sogenannten Fluid Catalytic Cracking-Prozess. Die Vakuumgasöle stammen aus der Vakuumdestillation des Erdöls, bei der Leichtsieder entfernt werden. Der Prozess wird mit FCC-Katalysatoren in sogenannten Riserreaktoren durchgeführt, bei denen Katalysatorströmen aus Katalysatorpartikel und Gas mit Öl in Kontakt und zur Reaktion gebracht werden. Die Katalysatorpartikel besitzen eine durchschnittliche Partikelgröße im Bereich von 60 bis 100 µm (oder auch 60 bis 150 µm). Die Reaktionen laufen bei Temperaturen von oberhalb 495 - 565 °C ab, wobei die Kontaktzeiten 20 Sekunden und weniger betragen. Die mittelgroßen FCC-Anlagen weisen eine Befüllung mit 100 - 200 t Katalysator auf, wobei in diesen Anlagen ein Katalysatorstrom von 0,5 bis 2 t/h zirkuliert.

Insbesondere ist auch die Untersuchung von FCC-Katalysatoren in Laborkatalysatortestungsständen von großer technischer Bedeutung. Bei den Laborkatalysatortestungsständen ist zwischen denjenigen Testständen zu unterscheiden, bei denen die Katalysatoren im Festbett getestet werden und denjenigen, bei denen die Katalysatoren in fluidisierten Katalysatorbetten getestet werden. Die Untersuchung von Katalysatoren in Festbetten eignet sich dann, wenn pro katalytischem Krackexperiment eine Katalysatormenge im Bereich von 0,5 bis 5 g Katalysator zur Verfügung steht. Bei dem fluidisierten Katalysatorbetten ist weiterhin zwischen den statisch fluidisierten und den dynamisch fluidisierten Betten zu unterscheiden. Als Beispiel für die Festbettuntersuchung sei auf die ASTM-Methode Nr. ASTM D-3907-86 verwiesen.

Als Beispiel für die Untersuchung von FCC-Katalysatoren in statisch fluidisierten Katalysatorbetten ist die Katalystortestungapparatur zu nennen, die von John Kayser in der US 6,069,012 offenbart wird. Die Menge an Katalysator, die hier für ein einzelnes katalytisches Krackungsexperiment eingesetzt wird, liegt im Bereich von 5 bis 12 g.

Ein Beispiel für Teststände mit dynamisch fluidisierten Katalysatorbetten ist durch die Micro-Downer-Unit gegeben, die in der ES 2187387 von Corma et al. offenbart wird. Der Katalysatorvorratsbehälter kann im Durchschnitt je nach Ausgestaltung eine Menge von 100 bis 500 g Katalysator aufnehmen. Der Katalysator hat eine Strömungsgeschwindigkeit von 10 bis 100 g pro Minute. In einer Publikation von Corma et al. (in Applied Catalysis A: General 232 (2992) S. 247 - 263) wird eine schematische Darstellung einer Apparatur Reaktor zur Untersuchung von FCC-Katalysatoren gezeigt, die mit einem Fallrohrreaktor ausgestattet ist. Das Öl wird mit einem Injektor in den Reaktor eingespritzt, wobei die Zuführung des Ölfeeds mittels einer Spritzenpumpe erfolgt. Die Zuführungsleitung für das Öl ist auch mit einer Gasleitung verbunden, so dass wahlweise entweder Ölfeed oder Gasfeed zum Injektor geleitet werden kann.

In Bezug auf den Ölinjektor weisen die Laborkatalysatorteststände oftmals eine Gemeinsamkeit auf, wobei der Ölinjektor, der in der US 6,069,012 offenbart wird, aus zwei Rohren besteht, bei dem ein kleineres Innenrohr durch ein größeres Außenrohr geführt wird. Das Öl wird dann durch das kleine Innenrohr in den Reaktionsraum gespritzt, wobei gleichzeitig ein Gasstrom durch das Außenrohr geleitet. Durch das Aufeinandertreffen des Ölstroms mit dem Gasstrom kommt es zu einer teilweisen Durchmischung. Der Gasstrom wird bereits vor der Einspeisung des Ölzuflusses gestartet und auch erst nach Abschaltung des Ölzuflusses beendet, um die Bildung von Ölrückständen an den Rohrenden zu vermeiden. Die Ölmengen, die pro Experiment zu injizieren sind, liegen im Bereich von 0,5 bis 5 mL. Die Ölinjektion erfolgt hierbei üblicherweise mittels Spritzenpumpen. Zur Quantifizierung der Ölmenge können die Spritzenpumpen wahlweise gewogen werden oder aber einer Kalibration unterzogen werden.

Im Stand der Technik wurden unterschiedliche Vorrichtungen und Verfahren zur Atomisierung von Flüssigkeiten beschrieben, die in unterschiedlichen technischen Bereichen zur Anwendung kommen. Als Beispiel sind die Herstellung von Sprühnebeln als Proben für analytische Untersuchungen, die Auftragung von Lacken durch Sprühverfahren sowie auf die Aufarbeitung von Rohölen zu nennen. Im nachfolgenden Teil werden einige Vorrichtungen und Verfahren zur Herstellung Sprühnebeln kurz näher dargestellt.

Im US-Patent US 6,241,159 B1 von A. Alfonso Ganán-Calvo et al., das am 16.08.2000 angemeldet wurde, wird ein Verfahren zur Atomisierung von Flüssigkeiten beschrieben und beansprucht, bei dem geeignete geometrische Parameter und physikalische Eigenschaften verwendete werden, um sicherzustellen, dass die Flüssigkeit in Form eines kontinuierlichen, stetigen kapillarförmigen Mikrostrahls durch eine Blende freigesetzt wird. Das Verfahren beruht auf dem Herausgabeeffekt, der durch eine Flüssigkeits-Gas-Grenzfläche, wenn das Gas herausgegeben wird an einem Punkt in der Nähe der flüssigen Oberfläche. Das erfindungsgemäße Verfahren lässt sich auf alle Verfahren anwendbar, die die homogene Atomisierung von Flüssigkeiten betreffen. Ein Anwendungsgebiet ist die elektronische Injektion von Treibstoff. Bei dem Verfahren wird die Flüssigkeit durch einen ersten Kanal geleitet und aus diesem in Form eines Strahls herausgeworfen. Die ausgeworfene Flüssigkeit wird von einem Gasstrahl mitgerissen und zusammen mit diesem durch eine Blendenöffnung hindurch geleitet.

Das US-Patent US 6,142,457 von Holtan et al., das am 30.01.1998 eingereicht wurde, bezieht sich auf eine Sprühdüse und ein Verfahren für die Atomisierung von flüssigen Beschickungen (Feeds). Insbesondere bezieht sich die Erfindung auf ein Verfahren zur Atomisierung von kohlenwasserstoffhaltigen Feeds, die in die katalytische Krackungszone von fluidisiertem katalytischen Krackverfahren (FCC) eingespeist werden. Die Düse umfasst eine primäre Durchführung, von der ein flüssiger Strom aufgenommen wird, und eine sekundäre Durchführung, von der ein Verdünnungsmedium aufgenommen wird. Das Verdünnungsmedium und der Flüssigkeitsstrom werden in einer Mischzone vereinigt, die sich zwischen dem Ausgang der zweiten Durchführung und dem Ausgang der ersten Durchführung lokalisiert ist. Das kohlenwasserstoffhaltige Feed wird bei dem Verfahren durch diejenige Durchführung geleitet, die im Inneren der Düse liegt. Das Verdünnungsmedium wird durch den ringförmigen Raum geleitet, der zwischen innerer und äußerer Durchführung angeordnet ist.

Die US-Patentanmeldung US2011/0203973 von Li et al., die am 23.02.2010 eingereicht wurde, bezieht sich auf ein Verfahren, bei dem Dispersionen aus superkritischer Flüssigkeit und Öl eingesetzt werden, um die kohlenwasserstoffhaltigen Feeds, die beispielsweise aus Schwerölen bestehen, aufzuarbeiten. Das Verfahren basiert auf der Verwendung eines Kapillarmischers, um Dispersionen herzustellen. Der Kapillarmischer enthält eine Kapillare im Innenraum des Mischers, durch welche das Öl geleitet wird. Die Kapillare im Innenraum und auch die Spitze der Kapillare ist von der superkritischen Flüssigkeit umgeben, die gleich Richtung fließt wie das Öl im Inneren der Kapillare. Um einen sehr hohen Durchsatz zu erzielen, der für die Aufarbeitung von Ölen notwendig ist, ist es erforderlich eine große Anzahl von Kapillarmischern gleichzeitig in einer parallelen Anordnung zu verwenden. Li et al. führen an, dass in einer bevorzugten Ausführungsform auch 100 oder auch 1000 Kapillarmischer parallel betrieben werden können.

In der am 27.09.1996 eingereichten US-Patentanmeldung US 5,868,322 von Loucks Jr. et al. wird eine Apparatur zur Herstellung von flüssigen Tropfen beschrieben, die einen mechanisch fixierte innere Mikrorohrleitung umfasst. Die flüssigen Tropfen in der Form von mikroskopisch feinen Nebeltropfen können zur Herstellung von Proben genutzt werden, die einer nachfolgenden Analyse unterzogen werden. Dabei kann es sich um MS, AA, ICP, CE/MS oder um ähnliche analytische Methoden handeln. Die Apparatur weist im Inneren eine mechanisch stabilisierte Mikroleitung auf, durch die die Flüssigkeit gefördert wird. Die äußere Leitung, die die innere Mikroleitung umschließt, weist an der Spitze eine Verjüngung auf.

In der PCT-Anmeldung WO 2014/099312 A1 wird von Anthony Mennito et al ein analysentechnisches Verfahren zur Charakterisierung von gesättigten Teilen von Petroleum oder Kohlenwasserstoffen mittels massenspektroskopischem Verfahren beschrieben, die hochsiedende Komponenten umfassen und bei dem eine Ionisierung mittels Laserdesorption genutzt wird. Die Zuführung der in Toluol gelösten Petroleumprobe erfolgt durch eine Spritzennadel mit einer Mikrospritze, wobei die Spritzennadel beheizt wird. Zur Herstellung eines Feinstnebel wird stickstoffhaltiges Gas aus einer beheizten Stahlnadel als Ko-Feed zudosiert. Eine weitere Desolvatisierung erfolgt durch Gegenleitung eines Stickstoffstroms.

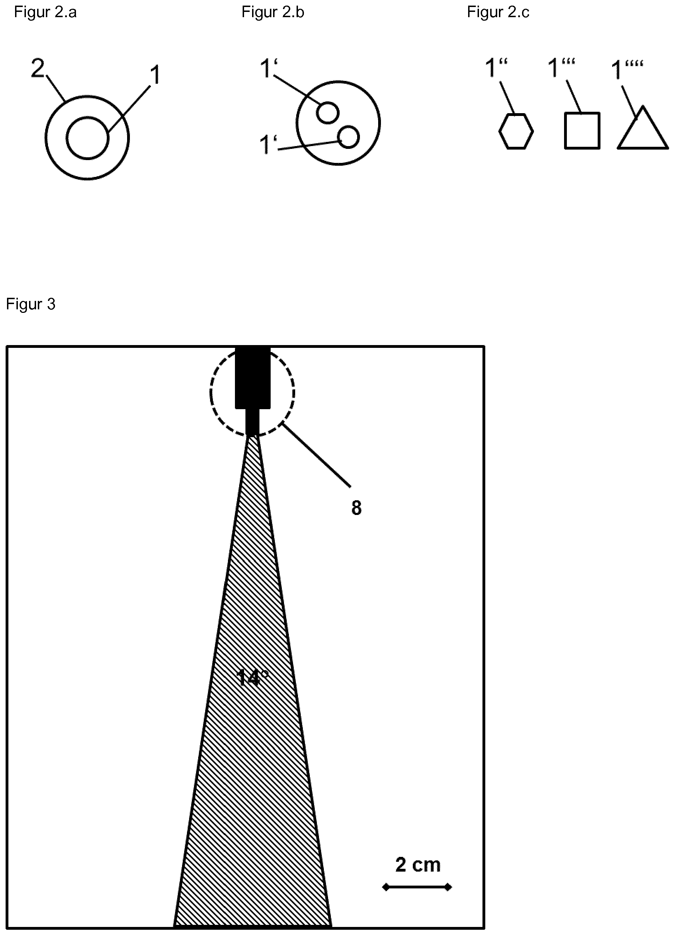

Die deutsche Patentanmeldung DE 10 2007 054 949 A1 von Schimkus et al., die am 17.11.2007 angemeldet worden war, betrifft eine Sprühpistole mit einer Doppelkanüle zum Versprühen von Farblacken. Die Doppelkanüle bildet eine Sprühlanze, wobei die flüssige Farbe beziehungsweise der Lack durch die innere Kapillare und das Gas durch das Außenrohr der Sprühlanze geleitet werden. Der Figur 2 lässt sich entnehmen, dass die kreisförmige Endfläche der inneren Kapillare und die ringförmige Endfläche des Außenrohrs in einer Ebene. Als ein Vorteil der Sprühlanze wird auch genannt, dass die Lanze abgewinkelt oder gekrümmt verlaufen kann, wodurch es ermöglicht wird, dass die Auftragung von Farbe in kontrollierter Weise an denjenigen Stellen vorgenommen werden kann, die in der räumlichen Zugänglichkeit begrenzt sind.

Des Weiteren betrifft die am 23.03.2010 angemeldete deutsche Patentanmeldung DE 102010 012 555 A1 von Prof. Peter Walzel eine Zweistoffinnenmischdüsenanordnung und ein Verfahren zur Zerstäubung von Flüssigkeiten. Mit Hilfe der erfindungsgemäßen Düse können Sprühnebel mit kleinen Tropfenabmessungen erschlossen werden, die nach der Zerstäubung eine Tropfenabmessung im Bereich von 1 bis 10 Mikrometern aufweisen. Im Innenraum der Düse sind eine Vielzahl von Kapillarleitungen angeordnet, durch welche die Flüssigkeit geleitet wird. Die Kapillarleitungen, die von einem Gasstrom umspült werden, enden in einem gemeinsamen Innenmischraum. Das Ende des Innenmischraums wird durch eine Düsenöffnung gebildet.

In der PCT-Anmeldung WO 02/099415 A1 wird von den Erfindern Paul O'Connor et al. die Zuführung von Öl in einen Labor-Riserreaktor mittels einer Hochdruckpumpe beschrieben. Die PCT-Anmeldung WO 02/099415 A1 stammt von der Firma Akzo. Der Vorteil der Hochdruckinjektion ist dadurch gegeben, dass in Verbindung mit den kurzen Injektionszeiten im Zeitbereich von weniger als 2 Sekunden auch sehr kurze Kontaktzeit erzielt werden können, die vorliegend weniger als 8 Sekunden betragen. In der Figur 1 der WO 02/099415 A1 ist eine Düse zur Zuführung von Feed und Fluidisierungsgas dargestellt. Die Düse steht mit einer Hochdruckpumpe Verbindung. Dabei wird die Atomisierung durch einen kontrollierten Druckabfall von einigen hundert Bar erzeugt, indem der Kraftstoff durch eine enge Stelle gedrückt beziehungsweise entspannt wird. Somit wird der Kraftsoff durch eine enge Leitung geführt. Das Feed wird über eine Düse injiziert, wobei diese Düse von einem Stickstoffstrom umgeben ist.

In der Patentanmeldung DE 102013019441 beschreiben die Erfinder Oliver Schulz et al. ein Zerstäubersystem für Zweiphasensysteme mit innerer Mischung. Der Vorteil des Zerstäubers mit Mischkammer ist die flächig gleichmäßige Auftragung von Aerosolen mit Partikeln im Gegensatz zu einem Zerstäubersystem ohne Mischkammer.

Eine erfindungsgemäße Aufgabe ist es, eine Vorrichtung und ein Verfahren bereit zu stellen, mittels dem die Laborkatalysatorteststände zur katalytischen Umsetzung von flüssigen Edukten verbessert werden. Insbesondere soll die experimentellen Gegebenheiten verbessert werden, die sich auf die Umsetzung von Ölen wie beispielsweise VGO beziehen. Eine weitere Aufgabe ist es, eine Vorrichtung bereitzustellen, die eine verbesserte Kontrolle bei der Zufuhr von Flüssigkeiten ermöglicht.

Zur Lösung der hier genannten Aufgaben wird eine Vorrichtung zum Versprühen von Flüssigkeiten bereitgestellt, die einen Nadelinjektor, eine Flüssigkeitszufuhr (5) und eine Gaszufuhr (4) umfasst, wobei der Nadelinjektor zumindest eine Kapillarleitung (1) und zumindest ein Außenrohr (2) umfasst. Der Nadelinjektor ist dadurch gekennzeichnet, dass der Innendurchmesser jeder Kapillarleitung (1) im Bereich von 2 - 1.000 µm liegt, vorzugsweise liegt der Innendurchmesser jeder Kapillarleitung im Bereich von 4 - 500 µm, weiter vorzugsweise im Bereich von 5 - 250 µm, und die Kapillarleitung koaxial im Innenraum des jeweiligen Außenrohrs (2) angeordnet ist, die Kapillarleitung (1) in Wirkverbindung mit der Gaszufuhr (4) und das Außenrohr in Wirkverbindung mit der Flüssigkeitszufuhr (5) steht.

In einer bevorzugten Ausführungsform ist die erfindungsgemäße Vorrichtung mit einem Gehäuse, vorzugsweise einem Rohrgehäuse (3) verbunden, wobei es bevorzugt ist, dass das Gehäuse mit einer Beheizvorrichtung (6) in Wirkverbindung steht.

Die Spitze (8) der Vorrichtung ist derart ausgestaltet, dass Längendifferenz von der Kapillarleitung (1) und dem Außenrohr (2) im Bereich von 0 - 10 mm liegt, vorzugsweise liegt die Längendifferenz im Bereich von 1 - 5 mm, wobei die Kapillarleitung (1) länger ist als das Außenrohr (2).

Die erfindungsgemäße Vorrichtung ist somit auch dadurch gekennzeichnet, dass die Spitze (8) des Nadelinjektors keine innere Mischkammer aufweist. Somit tritt die Mischung aus Flüssigkeit und Gas direkt in den äußeren Bereich des Nadelinjektors, ohne dabei in eine Mischkammer einzutreten. Die Abwesenheit einer Mischkammer ist vorteilhaft, da die Ausgestaltung der Vorrichtung ohne Mischkammer mit einem geringeren technischen Aufwand verbunden ist als eine Injektionsvorrichtung, die mit Mischkammer ausgestattet ist. Darüber hinaus ist die erfindungsgemäße Vorrichtung auch sehr robust.

Darüber hinaus ist es bevorzugt, dass die Vorrichtung in Verbindung mit einem Katalysatorteststand zur Untersuchung von FCC-Katalysatoren und/oder einer Alterungs- beziehungsweise Imprägnierungseinheit für FCC-Katalysatoren betrieben wird.

In dieser bevorzugten Ausführungsform als Katalysatorteststand beziehungsweise als Imprägnier-Vorrichtung ist die erfindungsgemäße Vorrichtung mit einem Rohrgehäuse (3) verbunden. Die Erfindung bezieht sich auch auf ein Verfahren zum Versprühen von Flüssigkeiten, das mittels der erfindungsgemäßen Vorrichtung durchgeführt wird, gemäß Anspruch 4.

Weiterhin ist das Verfahren zum Versprühen von Flüssigkeiten dadurch gekennzeichnet, dass die Flüssigkeit, die durch das Außenrohr (2) geleitet wird, einen Volumenstrom im Bereich von 0,1 - 500 mL/min aufweist, vorzugsweise im Bereich von 0,5 - 250 mL/min, und/oder das Gas, das durch die Kapillarleitung (1) geleitet wird, einen Volumenstrom im Bereich von 10- 10.000 mL/min, vorzugsweise im Bereich von 20 - 2.000 mL/min, aufweist.

In einer bevorzugten Ausführungsform erfolgt die Zufuhr beziehungsweise das Einleiten von Gasen beziehungsweise Flüssigkeiten, wenn diese temperiert werden. Zur Temperierung werden Bereiche des Gehäuses, der Gaszufuhr und/oder der Flüssigkeitszufuhr beheizt, wobei die Temperatur der Gaszufuhr im Bereich von 50 - 300 °C liegt, vorzugsweise liegt die Temperatur der Gaszufuhr im Bereich von 100 - 250 °C; die Temperatur der Flüssigkeitszufuhr liegt im Bereich von 50 bis 300 °C, vorzugsweise liegt die Temperatur im Bereich von 100 - 250 °C; die Temperatur des Gehäuses (3) liegt im Bereich von 80 - 700 °C, vorzugsweise im Bereich von 100 - 650 °C, weiter vorzugsweise im Bereich von 150 - 550 °C.

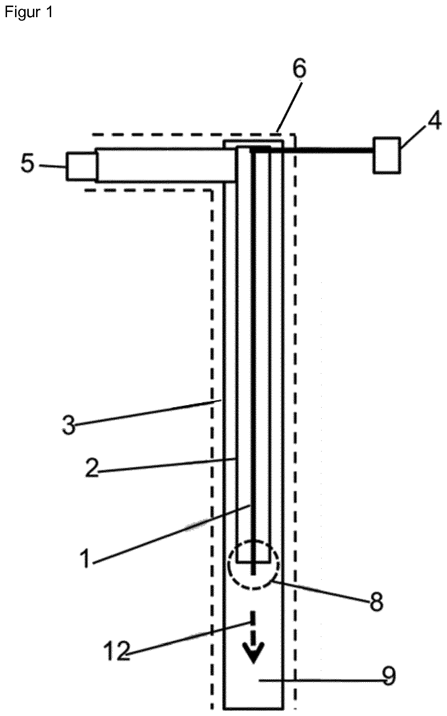

Das erfindungsgemäße Verfahren ist auch dadurch gekennzeichnet, dass die Zerstäubung der Flüssigkeit, vorzugsweise des Öls, ohne Düse erfolgt. Vorzugsweise weist der Nadelinjektor eine rohrförmige beziehungsweise eine stumpfartige Spitze auf wie in Fig. 1 dargestellt. Nachfolgend wird der Nadelinjektor auch als koaxialer Nadelinjektor bezeichnet. In einer bevorzugten Ausführungsform werden mittels des erfindungsgemäßen Verfahrens Schweröle wie beispielsweise VGO, HVGO versprüht.

Vorzugsweise ist die Längsachse des koaxialen Nadelinjektors, der zumindest die Kapillarleitung (1) und das Außenrohr (2) umfasst, vertikal angeordnet.

In einer bevorzugten Ausführungsform wird das erfindungsgemäße Verfahren mit einer Apparatur durgeführt, in der eine Mehrzahl von Vorrichtungen (d1, d2, d3, ...) zur Injektion von Flüssigkeiten eingebaut sind.

Das erfindungsgemäße Verfahren ist dadurch gekennzeichnet, dass das Gas mit hoher Lineargeschwindigkeit durch das Innenrohr geleitet wird und am Austrittspunkt eine Lineargeschwindigkeit von > 170 m/s (d.h. größer oder gleich 170 m/s) aufweist, die sich aus dem Verhältnis von Volumenstrom zu Querschnittsfläche des Innenrohrs ergibt und größer ist als 0,5 Mach, vorzugsweise größer als 0,7 Mach, insbesondere größer als 1,0 Mach. Bei der Angabe der Machzahl handelt es sich um eine rechnerische Größe, die sich auf den Volumenstrom ergibt, der an der Querschnittsfläche am oberen Ende der Kapillare auftritt (d.h. die Austrittsfläche).

Die hohe Lineargeschwindigkeit des Gases ist ein wesentliches Element des erfindungsgemäßen Verfahrens. Die hohe Lineargeschwindigkeit kann dadurch erreicht werden, dass das Innenrohr aus einer Kapillarleitung gebildet wird. Die Kapillare muss auch mit einem entsprechenden Vordruck angesteuert werden, um eine ausreichende Gasmenge durch die Kapillare zu leiten. Eine Kennzahl des erfindungsgemäßen Verfahrens ist durch das Verhältnis des Volumenstroms des Gasstroms zum Volumenstrom der Flüssigkeit gegeben, wobei ein bevorzugter Gasvolumenstrom einen Volumenstrom von 80 mL/min hat und ein bevorzugter Flüssigkeitsvolumenstrom 5 mL/min hat. Das Verhältnis von Gasvolumenstrom zu Flüssigkeitsvolumenstrom beträgt somit 16, wobei das Verhältnis von Gasvolumenstrom zu Flüssigkeitsvolumenstrom im Bereich von 500 - 1, vorzugsweise im Bereich von 10 - 200, insbesondere vorzugsweise im Bereich von 12 - 100, liegt.

Anhand der technischen Parameter lässt sich entnehmen, dass das erfindungsgemäße Verfahren in einer bevorzugten Ausführungsform auch dadurch gekennzeichnet, dass die mittels des Verfahrens hergestellten Feinstnebel ein sehr geringes Massenstromverhältnis Gas zu Flüssigkeit aufweisen. Vorzugsweise weist das Massenstromverhältnis von Gas zu Flüssigkeit einen Wert von < 0,1 auf, weiter vorzugsweise ist das Massenstromverhältnis von Gas zu Flüssigkeit < 0,04. Die Angabe des Massenstroms erfolgt hierbei (beispielsweise) in kg/h, wobei die Einheiten bei der Angabe des Massenstromverhältnisses gekürzt werden und sich aufheben. Durch diesen verfahrenstechnischen Aspekt beziehungsweise Parameter ist ein wesentlicher Unterschied gegenüber den im Stand der Technik beschriebenen Verfahren gegeben. Als vorteilhaft ist es hierbei auch, dass die erzeugten Feinstnebel durch geringe Ströme gekennzeichnet sind und das dabei sehr geringe Mengen an Gasen beziehungsweise an Flüssigkeiten verbraucht werden.

Es ist auch möglich, alternative Ausführungsformen für Kapillaren einzusetzen. Diese bestehen beispielsweise aus dünnen Rohrleitungen, welche an den Enden mit Lochblenden und Mikropins versehen sind. Die Verwendung von Kapillaren ist jedoch besonders bevorzugt. Kapillaren sind mit unterschiedlichen Durchmessern und Längen käuflich zu erwerben. Insbesondere sind Kapillaren auch mit geringen Innendurchmessern verfügbar. In Verbindung mit der Erfindung sind hohe Gasaustrittsgeschwindigkeiten von großer Bedeutung, die mit Kapillaren besonders gut erzielt werden können. Unter hohen Gasaustrittsgeschwindigkeiten sind insbesondere Austrittsgeschwindigkeiten zu verstehen, die größer oder gleich 1,5 Mach, vorzugsweise größer oder gleich 2,0 Mach sind. (Machzahl wird so ermittelt wie oben dargestellt.)

Zu erwähnen ist, dass beim erfindungsgemäßen Verfahren, die Gasmenge, die durch das Innenrohr geführt wird, in Bezug auf die Masse 18-mal geringer ist, als die Gasmenge, die in koaxialen Zweiphasenzerstäubern eingesetzt wird, die im Stand der Technik bekannt sind beziehungsweise die kommerziell verfügbar sind.

In Bezug auf den Volumenstrom bedeutet dies, dass das Gasvolumen, das durch das Innenrohr geführt wird, ein Volumen aufweist, das um den Faktor 16 kleiner ist als bei denjenigen Zweiphasenzerstäubern, die im Stand der Technik bekannt sind. In Bezug auf das erfindungsgemäße Verfahren ist auch festzustellen, dass es ein wesentliches Kennzeichen der Erfindung ist, dass ein Sprühnebel erzeugt wird, der auf der einen Seite nur eine geringe Strömungsrate aufweist und der auf der anderen Seite eine äußerst feine Verteilung an Flüssigkeits-Tröpfchen enthält.

Durch die Kombination der erfindungsgemäßen Vorrichtung und des erfindungsgemäßen Verfahrens zur Injektion von Ölen kommt es in Verbindung mit dem Einsatz in Verbindung mit bewegten Katalysatorbetten zu Synergieeffekten, die darin bestehen, dass hier eine besonders homogene Benetzung der Katalysatorpartikel ermöglicht wird, die mittels der aus dem Stand der Technik bekannten Injektoren nicht möglich sind. Weiterhin bevorzugt ist auch der Einsatz in Verbindung mit dynamisch bewegten Katalysatorbetten in Fallrohren oder in RiserReaktoren, da hierbei die verbesserte Kontrolle der Injektion von entscheidendem Interesse für die Qualität der experimentellen Testdaten ist.

In Bezug auf eine bevorzugte Ausgestaltungsform der Flüssigkeitszufuhr (5) ist festzustellen, dass diese eine Pumpe oder eine Kolbenspritze sowie ein Vorratsgefäß mit Flüssigkeit umfasst. Besonders bevorzugt ist eine Flüssigkeitszufuhr (5), die eine Pumpe aufweist. Weiter bevorzugt handelt es sich bei der Pumpe um eine Hochdruckpumpe (beispielsweise eine HPLC-Pumpe).

In einer bevorzugten Ausgestaltungsform umfasst die Gaszufuhr (4) eine Gasversorgungsnetz und einen Druckregler.

Darüber hinaus ist eine Ausführungsform bevorzugt, in der die Flüssigkeitszufuhr (5) und/oder die Gaszufuhr (4) mit einer Prozesssteuerung (PLC) verbunden sind. Mittels der Prozesssteuerung lassen sich die Parameter des Verfahrens steuern beziehungsweise regeln. Zu den Parametern gehören die Dauer der Dosierung des Sprühnebels mittels der erfindungsgemäßen Vorrichtung, die Strömungsgeschwindigkeit des Gasstroms und die Strömungsgeschwindigkeit der zu dosierenden Flüssigkeit. In einer bevorzugten Ausführungsform kann die Dosierung des Sprühnebels kontinuierlich vorgenommen werden. In einer anderen Ausführungsform, die ebenso bevorzugt ist, kann die Dosierung in Form von Dosierpulsen vorgenommen werden. Weiterhin ist es möglich, dass kontinuierliche Dosierung und pulsweise Dosierung im Wechsel vorgenommen werden können.

Ein bevorzugtes Einsatzgebiet der Erfindung betrifft die Verwendung der Vorrichtung zur Injektion von Ölen in Verbindung mit Laborkatalysatortestständen. Besonders bevorzugt sind Laborkatalysatorteststände zu Testung von FCC-Katalysatoren, wobei der Einsatz hierbei insbesondere in Verbindung mit denjenigen Laborkatalysatortestständen bevorzugt ist, die ein bewegtes Katalysatorbett aufweisen. Insbesondere bevorzugt sind hierbei auch Riser-Reaktoren oder Fallrohrreaktoren.

Ein weiteres bevorzugtes Einsatzgebiet der erfindungsgemäßen Vorrichtung und des erfindungsgemäßen Verfahrens steht in Zusammenhang mit Vorrichtungen zur kontrollierten Deaktivierung von FCC-Katalysatoren, in denen die Katalysatoren in fluidisierten Betten in beheizten Reaktionsrohren mit Ölen oder Metallsalzlösungen unter kontrollierten Bedingungen imprägniert werden. Es handelt sich hierbei um sogenannte Alterungseinheiten für Katalysatoren. Als Metallsalzlösungen können beispielsweise Vanadium- oder Nickelsalzlösungen verwendet werden. Alternativ ist es auch möglich, die Katalysatoren mit Lösungen zu besprühen, die die Metalle in Form von metallorganischen Verbindungen aufweisen. Somit ist eine Benetzung der Katalysatoren unter kontrollierten Bedingungen möglich. Die organischen Verbindungen werden in einem thermischen Behandlungsschritt durch Abbrennen entfernt. Dabei können Temperaturen im Bereich von 500 - 700 °C verwendet werden.

Ein Vorteil der erfindungsgemäßen Vorrichtung ist auch dadurch gegeben, dass die Bildung von Koks am Ende des Flüssigkeitsaustritts effizient unterbunden wird. Die Bildung von Koks bei der Injektion von Ölen in Reaktionsräume die bei hohen Temperaturen oberhalb von 400 °C, stellt ein großes technisches Problem dar, da die Ölinjektion hierdurch entweder gestört wird oder komplett blockiert wird. Eine Blockierung der Ölinjektion führt dazu, dass die Untersuchung abgebrochen werden muss. Die Vorrichtung muss auseinandergebaut und gereinigt werden.

Dabei ist auch zu beachten, dass die erfindungsgemäße Vorrichtung und das erfindungsgemäße Verfahren je nach Verwendungsgebiet - d.h. Einsatz in der Metallimprägnierung oder Einsatz in FCC-Laborkatalysatortestungsapparaturen - in unterschiedlichen Formen ausgestaltet sein kann. Grund hierfür ist, dass Vorrichtungen zur Metallimprägnierung in der Regel mit größeren Mengen an Katalysator befüllt sind. Die einzelnen Imprägnierrohre weisen eine Katalysatorbefüllung im Bereich von 50 bis 200 g auf. Häufig ist es hierbei erforderlich, eine größere Flüssigkeitsmenge in den Reaktionsraum und auf den Katalysator zu sprühen. Daher ist es möglich, dass mehrere erfindungsgemäße Vorrichtungen zur Injektion in einen einzelnen Reaktor führen. Beispielsweise kann ein einzelnes Reaktionsrohr mit zwei bis sechs der erfindungsgemäßen Vorrichtung zur Injektion von Ölen ausgestattet sein. Die einzelnen Vorrichtungen können dann, je nach Auslegung der Alterungsapparatur, alle gleichzeitig Eduktflüssigkeit in die Imprägnier-Rohre hineinsprühen oder einzeln zugeschaltet werden.

Die Ausgestaltung der Öffnungen ist nicht auf eine einzelne koaxiale beziehungsweise kreisförmige Anordnung der Kapillarleitung im Innenraum und der Flüssigkeitsführenden Leitung als Außenleitung beschränkt. Möglich ist auch, dass sich im Innenraum der Außenleitung (2) zwei oder mehr Kapillarleitungen befinden können (siehe Figur 2.b). Ebenso kann die Kapillare unterschiedliche geometrische Formen aufweisen. Abgesehen von einer runden oder elliptischen Querschnittsfläche ist es auch möglich, dass die Kapillarleitungen beispielsweise eine hexagonale Form, eine quadratische Form oder eine dreieckige Form aufweisen. Diesbezügliche Ausgestaltungen sind in der Figur 2.c dargestellt. Die Länge der Kapillare kann wenige Millimeter bis hin zu einigen Metern betragen. Vorzugsweise liegt die Länge der Kapillarleitung im Bereich von 1 - 150 cm, darüber hinaus bevorzugt ist eine Länge im Bereich von 3 - 100 cm, insbesondere bevorzugt ist eine Länge im Bereich von 3 - 20 cm. Vorzugsweise werden die Kapillarleitungen aus Metall, Stahl, Glas, Quarz, Keramik, Kunststoff gefertigt. Besonders bevorzugte Materialien sind Stahl oder fused silica-Quarz.

Kennzeichnend für das erfindungsgemäße Verfahren ist auch, dass die Re-Agglomeration oder Koagulation der zerstäubten Flüssigkeitstropfen sehr gering ist.

Das erfindungsgemäße Verfahren kann für die Zerstäubung sowohl von niederviskosen als auch hochviskosen Flüssigkeiten eingesetzt werden.

Zu erwähnen ist hierbei, dass die hochviskose Flüssigkeiten (d.h. Flüssigkeiten mit geringer Fließfähigkeit) eine deutlich bessere Tendenz zur Tröpfchenbildung aufweisen als niederviskose Flüssigkeiten (d.h. Flüssigkeiten mit einer hohen Fließfähigkeit). Beispielsweise hat Wasser bei 20 °C eine Viskosität von 1,001 mPa*s und Dodecan hat eine Viskosität von 1,520 mPa*s. In Verbindung mit dem erfindungsgemäßen Verfahren weist somit Dodecan eine höhere Tendenz zur Tröpfchenbildung auf als Wasser.

### Einsatz im FCC-Bereich

Bevorzugt ist es, die erfindungsgemäße Vorrichtung und das erfindungsgemäße Verfahren zur Injektion von Ölen in Kombination mit Katalysatortestständen zum Testen von FCC-Katalysatoren einzusetzen. Besonders vorteilhaft ist es, dass das Verfahren sehr gut zu steuern ist, wobei bei FCC-Tests eine exakte Kontrolle der Eduktfluidzufuhr beziehungsweise der Ölzufuhr von großer Bedeutung ist, insbesondere die Zufuhr von Mengen im Bereich von 0,1 bis 50 g/min, vorzugsweise 0,5 - 10 g/min.

Der Katalysator weist eine Temperatur im Bereich von 600°C bis 800°C, wohingegen die Temperatur der Eduktflüssigkeit bei einer Temperatur im Bereich von 50 bis 300 °C, vorzugsweise bei einer Temperatur im Bereich 100 bis 250 °C liegt. Eine obere Temperaturgrenze ergibt sich dadurch, dass ansonsten die thermische Krackung der Flüssigkeiten einsetzt, was die Untersuchungen nachteilhaft beeinträchtigt. Eine bestimmte Mindesttemperatur ist insbesondere dann notwendig, wenn die Öle erst verflüssigt werden müssen.

Im Reaktionsraum des Katalysatorteststands liegt die Temperatur bei 550 °C, wobei das Öl das beispielsweise auf 250°C vorgeheizt wird, unter kontrollierten Bedingungen in den Reaktionsraum hineininjiziert wird. Zu beachten ist, dass es mittels des erfindungsgemäßen Verfahrens viel besser ist, an dieser Stelle eine möglichst homogene Vermischung der Öltröpfchen und der Katalysatorpartikel zu erzielen, damit diese unter kontrollierten Bedingungen reagieren können. Die erfindungsgemäße Vorrichtung und das erfindungsgemäße Verfahren bewirken, dass das Öl sehr hoch dispers zerstäubt und dass dabei auch das zerstäubte Öl innerhalb einiger Millisekunden in innigen Kontakt zum Katalysator gebracht werden kann. Dabei erfolgt auch eine Erhitzung des Öls, beispielsweise im vorliegenden Fall auf 550°C. Es laufen die Prozesse der Zerstäubung des Öls und Benetzung des Katalysators mit Öl gleichzeitig ab.

### Beispiele

I. Zur Illustration der erfindungsgemäßen Vorrichtung und des erfindungsgemäße Verfahrens wurde eine Vorrichtung gemäß der schematischen Darstellung aufgebaut, die in Figur 1 gezeigt wird. Zur Herstellung des Nadelinjektors wurde eine fused silica Kapillare mit einem Innendurchmesser von 50 µm und einer Länge von 30 cm in ein 1/16" Stahlrohr (1/16" Zoll Außendurchmesser entspricht einem Innendurchmesser von 1,387 mm, da das Stahlrohr etwa 0,1 mm Wandstärke aufweist) der gleichen Länge eingeführt. An ein Endstück der fused silica Kapillare wurde an eine Gaszufuhr angeschlossen und an ein Endstück der Stahlkapillare wurde an eine Flüssigkeitszufuhr angeschlossen. Der mit der Gas- und Flüssigkeitszufuhr ausgestattete Injektor wurde vertikal in einer Halterung positioniert, bei der die Spitze des Nadelinjektors 8 cm über einer Platte angeordnet wurde. Unter der Spitze des Nadelinjektors wurde auf der Oberseite der Platte ein rechteckiger Papierstreifen (4 cm x 10 cm) platziert. Mittels der Gas- und der Flüssigkeitszufuhr wurden in kontrollierter Weise Gas und Flüssigkeit durch Nadelinjektor geleitet. Die Flüssigkeitszufuhr lag bei 5 mL/min und die Gaszufuhr lag bei 80 mL/min. Mit der Vorrichtung wurden Sprühinjektionen vorgenommen. Beim Austritt der Fluide aus den Rohrenden an der Spitze des Nadelinjektors wurde ein in sich stabiler Sprühnebel erzeugt. Der Sprühnebel wurde auf dem Papierstreifen aufgefangen, der unterhalb des Injektors platziert worden war. Als Flüssigkeit wurde für die Sprühexperimente Tinte (eine wässrige Farblösung) verwendet. Im Bereich unterhalb der Austrittsöffnung der Injektornadel war ein Sprühnebel mit kegelförmiger Form zu beobachten. Für den Beobachtungszeitrum von 10 Minuten waren keine Formveränderungen zu erkennen. Somit wies der Sprühkegel eine konstante Form auf. In Figur 3 ist ein Foto eines Sprühkegels gezeigt, der einen Öffnungswinkel von 14° aufweist. Einzelne Tröpfchen liegen unterhalb der optisch auflösbaren Grenze und sind nicht erkennbar. Die Stabilität des Feinstnebels lässt auf eine Tröpfchengröße von 10 µm bis 20 µm schließen.
II. Trägerung eines organischen Farbstoffs zur Herstellung eines Pigments
   Zur Illustration des erfindungsgemäßen Verfahrens wurde ein pulverförmiger Fest-stoff, der aus einem aluminiumoxidhaltigen Trägeroxid von der Firma Alcoa bestand, mit eosinhaltiger Tinte beschichtet. Bei dem aluminiumoxidhaltigen Trägeroxid handelte es sich um ein FCC-Katalysatormaterial, das mittels Sprühtrockner aus einer Sprüh-Suspension hergestellt worden war, in der die Ausgangskomponenten enthalten waren. Die eosinhaltige rote Tinte wurde in Aceton gelöst, wobei ein Volumenverhältnis von 1 : 10 (d.h. 1 Teil Tinte zu 10 Teilen Aceton) gewählt wurde. Bei Eosin handelt es sich um Tetrabromfluorescein beziehungsweise das Dinatriumsalz von 2',4',5',7'-Tetrabrom-3',6'-dihydroxyspiro [2-benzofuran-3,9'-xanthen]-1-on. Die Konzentration an Eosinfarbstoff (Tetrabromfluorescein) in der Tinte betrug 1 mol/L. Das aluminiumoxidhaltigen Trägeroxid wies eine mittlere Partikelgröße von 85 µm auf, wobei die Größenverteilung der Partikel im Bereich von 50 - 120 µm lag, so dass die Partikel durch einen Gasstrom in den fluidisierten Zustand überführbar waren. Das pulverförmige Aluminiumoxid (250 g) wurde in ein temperiertes Reaktionsrohr eingebracht, das mit einem erfindungsgemäßen Injektor versehen war. Der Durchmesser des Reaktionsrohrs betrug 6 mm, die Länge 1 m. Das Reaktionsrohr wurde bei 80 °C temperiert. Durch Zuleitungsdüsen wurde ein Gasstrom in das Reaktionsrohr eingeführt, wodurch das pulverförmige Aluminiumoxid in den fluidisierten Zustand überführt wurde. Während das fluidisierte Aluminiumoxid in dem Zuführungsbehälter bei 80 °C gelagert wurde, wurde die Sprühinjektion der Eosinlösung für eine Zeitdauer von 60 Sekunden durchgeführt, wobei die Injektion mit einer Strömungsgeschwindigkeit von 10 mL/min erfolgte. Somit wurden 10 mL Eosin-Aceton-Lösung injiziert. Mittels der erfindungsgemäßen Vorrichtung und das erfindungsgemäße Verfahren wurden im vorliegenden Fall pro Minute 250 g des pulverförmigen Trägermaterials unter kontrollierten Bedingungen mit dem Farbstoff beschichtet. Die Reaktionszeit beziehungsweise der Beschichtungszeitraum wurde in wenigen Millisekunden durchgeführt, wobei das Aceton direkt über die Gasphase abgetrennt wurde. (Die Verweilzeit im Reaktionsrohr lag im Bereich von 2 - 6 Sekunden.) Die Bestimmung der Verweilzeit ergibt sich aus dem Gasstrom sowie dem Kohlenwasserstoffanteil, der verdampft wird. Der verdampfte Kohlenwasserstoffanteil erhöht somit das Volumen des Gasstroms. Im vorliegenden Fall wurde Aceton als Lösungsmittel für den eosinhaltigen Farbstoff im Reaktionsrohr verdampft. Der rot beschichtete Träger wurde nach dem Reaktionsrohr aufgefangen. Die Analyse des beschichteten Trägermaterial ergab, dass eine sehr gleichmäßige und homogene Verteilung des Farbstoffes auf den einzelnen Partikeln vorlag.

Dieses erfindungsgemäße Verfahren ist außer dem dargelegten diskontinuierlichen Betrieb dazu geeignet kontinuierlich betrieben zu werden und ist daher besonders geeignet z.B. Trägerungen im semi-industriellen Maßstab zu betreiben. Bei einem kontinuierlichen Betrieb der in dem Beispiel beschriebenen Vorrichtung können unter den hier dargestellten Bedingungen eine Katalysatormenge von 360 kg/Tag mittels des erfindungsgemäßen Verfahrens imprägniert oder beschichtet werden. Zur Durchführung des Verfahrens im kontinuierlichen Betrieb müssten die Vorrichtungskomponenten für die Katalysatorzuführung, die Katalysatoraufnahme sowie die Vorlage für die Imprägnierlösung entsprechend vergrößert und angepasst werden. In der hier beschriebenen Vorrichtung können nach einer entsprechenden Anpassung der Vorrichtung bereits bis zu 500 kg/Tag Material umgesetzt oder behandelt werden. In einer weiteren Ausführungsform der erfindungsgemäßen Vorrichtung können die Reaktionsrohre auch in parallel angeordneter Form vorliegen. Dadurch kann der Betrieb des Verfahrens in einer noch effizienteren Weise betrieben werden, da sowohl die hohe Genauigkeit des Verfahrens bei der Beschichtung beziehungsweise Imprägnierung genutzt werden kann als auch die vorteilhafte Ausgestaltungmöglichkeit der Vorrichtung zu einer verbesserten Effizienz beim Betrieb der Vorrichtung führen kann. Vorteilhaft ist die Anordnung von zwei oder mehr parallel angeordneten Reaktionsrohren, die in Verbindung mit einer gemeinsamen Vorlage für Imprägnier- oder Beschichtungsfluid ausgestattet sind. Beispielsweise kann die erfindungsgemäße Vorrichtung in einer Ausführungsform mit vier parallel angeordneten Reaktionsrohren dazu verwendet werden, um eine Katalysatormenge von 1,4 - 2 Tonnen pro Tag zu beschichten. Vorteilhaft ist, dass die Vorrichtung nur geringe Dimensionen mit einem Reaktionsrohr von einem Meter Länge und einem Durchmesser von 6mm aufweisen kann und das Verfahren in einer kurzen Zeit durchgeführt werden kann. In den im Beispiel genannten Dimensionen des Reaktionsrohrs und bezogen auf die Dichte des Aluminiumoxids von 4 g/cm können so von 40 g/min bis zu 250 g/min Material beschichtet werden. Im Bereich von Spezialitätenchemikalien können Tagesproduktionsmengen von 1 - 2 Tonnen pro Tag bereits eine Menge darstellen, die von großer wirtschaftlicher Bedeutung ist.

Die hier dargestellten Ausgestaltungen der erfindungsgemäßen Vorrichtung sind in keiner Weise abschließend oder eingrenzend zu verstehen. In einer weiteren Ausführungsform der Vorrichtung können zwei oder mehr Reaktionsrohre in Serie geschaltet werden, wobei auf das durchgesetzte Katalysatormaterial oder Trägermaterial unterschiedliche Imprägnier- oder Beschichtungslösungen aufgetragen werden können.

### Kurze Beschreibung der Figuren:

- Figur 1: zeigt eine schematische Darstellung der erfindungsgemäßen Vorrichtung zum Versprühen von Flüssigkeiten mit Kapillarleitung (1) und Außenrohr (2), bei der die Vorrichtung in einem Rohrgehäuse (3) angeordnet ist. Das Rohrgehäuse ist von einer Heizvorrichtung (6) umgeben.
- Figur 2.a: zeigt eine schematische Darstellung des Querschnitts durch den Injektor der erfindungsgemäßen Vorrichtung, wobei der Injektor eine Kapillarleitung (1) und ein Außenrohr (2) aufweist
- Figur 2.b: zeigt eine schematische Darstellung des Querschnitts durch den Injektor der erfindungsgemäßen Vorrichtung, wobei der Injektor zwei unterschiedlichen Kapillarleitungen (1') und (1') sowie ein Außenrohr (2) aufweist.
- Figur 2.c: zeigt schematische Darstellungen der Querschnitte von unterschiedlich ausgestalteten Kapillarleitungen, die eine hexagonale Form (1"), eine quadratische Form (1'") und eine dreieckige Form (1"") aufweisen.
- Figur 3: zeigt eine fotografische Aufnahme der Injektorspitze (8) im Betriebszustand, wobei eine Farblösung mittels der der erfindungsgemäßen Vorrichtung versprüht wird. Der Sprühkegel weist einen Öffnungswinkel von 14 ° auf. Einzelne Tröpfchen sind optisch nicht auflösbar.

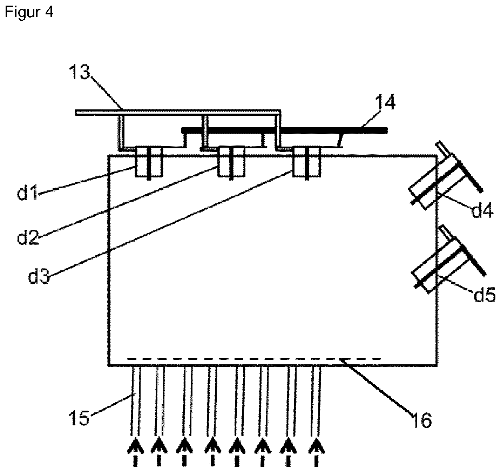

- Figur 4: zeigt eine schematische Darstellung der erfindungsgemäßen Vorrichtung zur Versprühung von Flüssigkeiten in einer Anordnung mit einer Mehrzahl von Vorrichtungen. Im vorliegenden Fall werden die Vorrichtungen zum Versprühen von Flüssigkeit in Apparatur zur Imprägnierung von Katalysatoren verwendet, wobei die Apparatur drei kopfseitige Vorrichtungen (d1, d2, d3) und zwei seitliche Vorrichtungen (d4, d5) aufweist.

### Bezugszeichenliste

- 1, 1', 1"...: - Kapillarleitung in unterschiedlichen Ausgestaltungen
- 2: - Außenrohr für Flüssigkeitszufuhr/Ölzufuhr
- 3: - Gehäuse
- 4: - Gaszufuhr
- 5: Flüssigkeitszufuhr
- 6: - Heizvorrichtung
- 8: - Injektor-Spitze
- 9: - Kontaktraum, Reaktionsraum
- 12: - Flussrichtung
- 13: - gemeinsame Flüssigkeitszufuhr für Injektoren d1, d2, d3
- 14: - gemeinsame Gaszufuhr für die Injektoren d1, d2, d3
- 15: - Gaszufuhr für Fluidisierungsgas
- 16: - Sieb oder Fritte, zur Abschirmung der Gaszufuhrleitungen
- d1, d2, d3: - vertikal angeordnete Injektoren, Kopfseite der Apparatur
- d4, d5: - seitlich angeordnete Injektoren, Längsachse der Injektoren weist einen Kippwinkel gegenüber der vertikalen Achse auf, Kippwinkel ist <40 °, vorzugweise < 30 °, weiter vorzugsweise < 25 °

## Patentansprüche

1. Vorrichtung zum Versprühen von Flüssigkeiten, die einen Nadelinjektor, eine Flüssigkeitszufuhr (5) und eine Gaszufuhr (4) umfassen, wobei der Nadelinjektor zumindest eine Kapillarleitung (1) und zumindest ein Außenrohr (2) umfasst und der Nadelinjektor **dadurch gekennzeichnet ist, dass** der Innendurchmesser jeder Kapillarleitung (1) im Bereich von 2 - 400 µm liegt, vorzugsweise liegt der Innendurchmesser jeder Kapillarleitung im Bereich von 4 - 300 µm, weiter vorzugsweise im Bereich von 5 - 250 µm, und die Kapillarleitung koaxial im Innenraum des jeweiligen Außenrohrs (2) angeordnet ist, die Kapillarleitung (1) in Wirkverbindung mit der Gaszufuhr (4) und das Außenrohr in Wirkverbindung mit der Flüssigkeitszufuhr (5) steht, wobei die Spitze (8) der Vorrichtung derartig ausgestaltet ist, dass die Längendifferenz von der Kapillarleitung (1) und dem Außenrohr (2) im Bereich von 0 - 10 mm liegt, wobei die Kapillarleitung (1) länger ist als das Außenrohr (2).

2. Vorrichtung zum Versprühen von Flüssigkeiten nach Anspruch 1, die **dadurch gekennzeichnet ist, dass** die Vorrichtung mit einem Gehäuse, vorzugsweise einem Rohrgehäuse (3) verbunden ist, wobei es bevorzugt ist, dass das Gehäuse mit einer Beheizvorrichtung (6) in Wirkverbindung steht.

3. Verwendung einer Vorrichtung zum Versprühen von Flüssigkeiten nach einem der Ansprüche 1 oder 2, die **dadurch gekennzeichnet ist, dass** die Vorrichtung in Verbindung mit einem Katalysatorteststand zur Untersuchung von FCC-Katalysatoren und/oder einer Alterungs- beziehungsweise Imprägnierungseinheit für FCC-Katalysatoren betrieben wird.

4. Verfahren zum Versprühen von Flüssigkeiten mittels einer Vorrichtung, die durch die Ansprüche 1 - 3 charakterisiert wird, wobei das Verfahren die nachfolgenden Schritte umfasst:
(i) kontrolliertes Einleiten eines Gases mittels Gaszufuhr (4) in eine Kapillarleitung (1),
(ii) kontrolliertes Einleiten einer Flüssigkeit mittels Flüssigkeitszufuhr in den Innenraum eines Außenrohrs (8),
(iii) Inkontaktbringen der durch das Außenrohr (8) geführten Flüssigkeit mit dem durch die Kapillarleitung (1) geführten Gas an der Spitze (8) der Vorrichtung, wobei die Lineargeschwindigkeit des Gases größer als 0,5 Mach ist und das Verhältnis zwischen dem Volumenstrom des Gasstroms zum Volumenstrom der Flüssigkeit im Bereich von 500 - 1 liegt.

5. Verfahren zum Versprühen von Flüssigkeiten nach Anspruch 4, das **dadurch gekennzeichnet ist, dass** die Flüssigkeit, die durch das Außenrohr (2) geleitet wird, einen Volumenstrom im Bereich von 0,1 - 10 mL/min aufweist, vorzugsweise im Bereich von 0,5 - 5 mL/min, und/oder das Gas, das durch die Kapillarleitung (1) geleitet wird, einen Volumenstrom im Bereich von 10 - 300 mL/min, vorzugsweise im Bereich von 20 - 200 mL/min aufweist.

6. Verfahren zum Versprühen von Flüssigkeiten nach Anspruch 4 oder Anspruch 5, das **dadurch gekennzeichnet ist, dass** eine Temperierung des Gehäuses, der Gaszufuhr und/oder der Flüssigkeitszufuhr erfolgt, wobei die Temperatur der Gaszufuhr im Bereich von 50 - 300 °C liegt, vorzugsweise liegt die Temperatur der Gaszufuhr im Bereich von 100 - 250 °C; die Temperatur der Flüssigkeitszufuhr liegt im Bereich von 50 bis 300 °C, vorzugsweise liegt die Temperatur im Bereich von 100 - 250 °C; die Temperatur des Gehäuses (3) liegt im Bereich von 80 - 700 °C, vorzugsweise im Bereich von 100 - 650 °C, weiter vorzugsweise im Bereich von 150 - 550 °C.

7. Verfahren zum Versprühen von Flüssigkeiten nach einem der Ansprüche 4 - 6, das **dadurch gekennzeichnet ist, dass** mittels des Verfahrens Schweröle wie VGO, HVGO versprüht werden.

8. Verfahren zum Versprühen von Flüssigkeiten nach einem der Ansprüche 4 - 7, das **dadurch gekennzeichnet ist, dass** die Öldosierung pulsweise oder kontinuierlich erfolgt und die Pulse eine Zeitdauer im Bereich von 1 - 400 Sekunden aufweisen, vorzugsweise im Bereich von 5 - 200 Sekunden, weiter vorzugsweise im Bereich von 5 - 150 Sekunden.

9. Verfahren zum Versprühen von Flüssigkeiten nach einem der Ansprüche 4 - 8, das **dadurch gekennzeichnet ist, dass** der Nadelinjektor, der Kapillarleitung (1) und das Außenrohr (2) umfasst, vertikal angeordnet ist.

10. Verfahren zum Versprühen von Flüssigkeiten nach einem der Ansprüche 5- 9, das **dadurch gekennzeichnet ist, dass** die mittels des Verfahrens hergestellten Feinstnebel ein Massenstromverhältnis von Gas zu Flüssigkeit von < 0,1 aufweisen, vorzugsweise weisen die Feinstnebel ein Massenstromverhältnis von Gas zu Flüssigkeit von < 0,04 auf.

11. Verfahren zum Versprühen von Flüssigkeiten mit einer Vorrichtung nach einem der Ansprüche 1 - 3, wobei die Verwendung gemäß eines Verfahrens nach den Ansprüchen 4 bis 9 erfolgt und die Verwendung **dadurch gekennzeichnet ist, dass** die Vorrichtung und das Verfahren mit einem PC gesteuert werden.

## Claims

1. An apparatus for spraying liquids, which comprises a needle injector, a liquid supply (5) and a gas supply (4), wherein the needle injector comprises at least one capillary line (1) and at least one outer tube (2) and the internal diameter of each capillary line (1) of the needle injector is in the range of 2-400 µm, preferably in the range of 4-300 µm, more preferably in the range of 5-250 µm, and the capillary line is coaxially arranged in the interior space of the respective outer tube (2), the capillary line (1) is in active communication with the gas supply (4) and the outer tube is in active communication with the liquid supply (5), with the tip (8) of the apparatus being configured in such a way that the length difference between the capillary line (1) and the outer tube (2) is in the range of 0-10 mm, with the capillary line (1) being longer than the outer tube (2).

2. The apparatus for spraying liquids according to claim 1, wherein the apparatus is joined to a housing, preferably a tubular housing (3), with preference being given to the housing being in active communication with a heating device (6).

3. The use of an apparatus for spraying liquids according to either of claims 1 and 2, wherein the apparatus is operated in conjunction with a catalyst testing setup for examining FCC catalysts and/or an aging or impregnation unit for FCC catalysts.

4. A process for spraying liquids by means of an apparatus as defined in any of claims 1-3, wherein the process comprises the following steps:
(i) controlled introduction of a gas by means of the gas supply (4) into a capillary line (1),
(ii)controlled introduction of a liquid by means of the liquid supply into the interior space of an outer tube (8),
(iii) contacting of the liquid conveyed through the outer tube (8) with the gas conveyed through the capillary line (1) at the tip (8) of the apparatus, wherein the linear velocity of the gas is greater than Mach 0.5 and the ratio between the volume flow of the gas stream and the volume flow of the liquid is in the range of 500-1.

5. The process for spraying liquids according to claim 4, wherein the liquid which is conveyed through the outer tube (2) has a volume flow in the range of 0.1-10 ml/min, preferably in the range of 0.5-5 ml/min, and/or the gas which is conveyed through the capillary line (1) has a volume flow in the range of 10-300 ml/min, preferably in the range of 20-200 ml/min.

6. The process for spraying liquids according to claim 4 or claim 5, wherein the housing, the gas supply and/or the liquid supply are heated, with the temperature of the gas supply being in the range of 50-300°C, preferably in the range of 100-250°C; the temperature of the liquid supply being in the range from 50 to 300°C, preferably in the range from 100-250°C; and the temperature of the housing (3) being in the range of 80-700°C, preferably in the range of 100-650°C, more preferably in the range of 150-550°C.

7. The process for spraying liquids according to any of claims 4-6, wherein heavy oils such as VGO, HVGO are sprayed by means of the process.

8. The process for spraying liquids according to any of claims 4-7, wherein the oil is introduced in pulses or continuously and the pulses have a duration in the range of 1-400 seconds, preferably in the range of 5-200 seconds, more preferably in the range of 5-150 seconds.

9. The process for spraying liquids according to any of claims 4-8, wherein the needle injector comprising the capillary line (1) and the outer tube (2) is arranged vertically.

10. The process for spraying liquids according to any of claims 5-9, wherein the very fine mists produced by means of the process have a mass flow ratio of gas to liquid of < 0.1, preferably the very fine mists have a mass flow ratio of gas to liquid of < 0.04.

11. The process for spraying liquids using an apparatus according to any of Claims 1-3, wherein a process according to any of claims 4 to 9 is used and the apparatus and the process are controlled by means of a PC for the use.

## Revendications

1. Dispositif pour la pulvérisation de liquides, qui comprend un injecteur à aiguille, une amenée de liquide (5) et une amenée de gaz (4), l'injecteur à aiguille comprenant au moins une conduite capillaire (1) et au moins un tube extérieur (2), et l'injecteur à aiguille étant **caractérisé en ce que** le diamètre intérieur de chaque conduite capillaire (1) se situe dans la plage allant de 2 à 400 µm, le diamètre intérieur de chaque conduite capillaire se situant de préférence dans la plage allant de 4 à 300 µm, de manière davantage préférée dans la plage allant de 5 à 250 µm, et la conduite capillaire étant agencée coaxialement dans l'espace intérieur du tube extérieur respectif (2), la conduite capillaire (1) étant en liaison fonctionnelle avec l'amenée de gaz (4) et le tube extérieur étant en liaison fonctionnelle avec l'amenée de liquide (5), la pointe (8) du dispositif étant configurée de telle sorte que la différence de longueur entre la conduite capillaire (1) et le tube extérieur (2) se situe dans la plage allant de 0 à 10 mm, la conduite capillaire (1) étant plus longue que le tube extérieur (2).

2. Dispositif pour la pulvérisation de liquides selon la revendication 1, qui est **caractérisé en ce que** le dispositif est relié avec un boîtier, de préférence un boîtier tubulaire (3), le boîtier étant de préférence en liaison fonctionnelle avec un dispositif de chauffage (6).

3. Utilisation d'un dispositif pour la pulvérisation de liquides selon l'une quelconque des revendications 1 ou 2, qui est **caractérisé en ce que** le dispositif est exploité en connexion avec un banc de test de catalyseurs pour l'étude de catalyseurs FCC et/ou une unité de vieillissement ou d'imprégnation pour catalyseurs FCC.

4. Procédé de pulvérisation de liquides au moyen d'un dispositif, qui est **caractérisé par** les revendications 1 à 3, le procédé comprenant les étapes suivantes :
(i) l'introduction contrôlée d'un gaz au moyen d'une amenée de gaz (4) dans une conduite capillaire (1),
(ii) l'introduction contrôlée d'un liquide au moyen d'une amenée de liquide dans l'espace intérieur d'un tube extérieur (8),
(iii) la mise en contact du liquide conduit dans le tube extérieur (8) avec le gaz conduit dans la conduite capillaire (1) au niveau de la pointe (8) du dispositif, la vitesse linéaire du gaz étant supérieure à 0,5 Mach et le rapport entre le débit volumique du courant gazeux et le débit volumique du liquide se situant dans la plage allant de 500 à 1.

5. Procédé de pulvérisation de liquides selon la revendication 4, qui est **caractérisé en ce que** le liquide qui est conduit dans le tube extérieur (2) présente un débit volumique dans la plage allant de 0,1 à 10 ml/min, de préférence dans la plage allant de 0,5 à 5 ml/min, et/ou le gaz qui est conduit dans la conduite capillaire (1) présente un débit volumique dans la plage allant de 10 à 300 ml/min, de préférence dans la plage allant de 20 à 200 ml/min.

6. Procédé de pulvérisation de liquides selon la revendication 4 ou la revendication 5, qui est **caractérisé en ce qu'**un conditionnement en température du boîtier, de l'amenée de gaz et/ou de l'amenée de liquide a lieu, la température de l'amenée de gaz se situant dans la plage allant de 50 à 300 °C, la température de l'amenée de gaz de situant de préférence dans la plage allant de 100 à 250 °C ; la température de l'amenée de liquide se situant dans la plage allant de 50 à 300 °C, la température se situant de préférence dans la plage allant de 100 à 250 °C ; la température du boîtier (3) se situant dans la plage allant de 80 à 700 °C, de préférence dans la plage allant de 100 à 650 °C, de manière davantage préférée dans la plage allant de 150 à 550 °C.

7. Procédé de pulvérisation de liquides selon l'une quelconque des revendications 4 à 6, qui est **caractérisé en ce que** des huiles lourdes telles que VGO, HVGO sont pulvérisées au moyen du procédé.

8. Procédé de pulvérisation de liquides selon l'une quelconque des revendications 4 à 7, qui est **caractérisé en ce que** le dosage des huiles a lieu par impulsions ou en continu, et les impulsions présentent une durée dans la plage allant de 1 à 400 secondes, de préférence dans la plage allant de 5 à 200 secondes, de manière davantage préférée dans la plage allant de 5 à 150 secondes.

9. Procédé de pulvérisation de liquides selon l'une quelconque des revendications 4 à 8, qui est **caractérisé en ce que** l'injecteur à aiguille, la conduite capillaire (1) et le tube extérieur (2) sont agencés verticalement.

10. Procédé de pulvérisation de liquides selon l'une quelconque des revendications 5 à 9, qui est **caractérisé en ce que** les brouillards fins produits au moyen du procédé présentent un rapport entre les débits massiques de gaz et de liquide < 0,1, les brouillards fins présentant de préférence un rapport entre les débits massiques de gaz et de liquide < 0,04.

11. Procédé de pulvérisation de liquides avec un dispositif selon l'une quelconque des revendications 1 à 3, l'utilisation ayant lieu par un procédé selon les revendications 4 à 9 et l'utilisation étant **caractérisée en ce que** le dispositif et le procédé sont commandés par un PC.
